# EUROPEAN PATENT SPECIFICATION

(11) **EP 2 260 719 B1**
(45) Date of publication and mention of the grant of the patent: **25.02.2015**
(21) Application number: 10160392.6
(22) Date of filing: 20.04.2010
(51) Int. Cl.: A23L 1/39, A23L 1/48, A23L 3/36, A23L 1/00

(54) **Unitized frozen sauce products**
Vereinheitlichte gefrorene Saucenprodukte
Produits de sauce surgelée unitisés

(30) Priority: 20.05.2009 US 468996
(43) Date of publication of application: 15.12.2010
(73) Proprietor: Unilever N.V., 3013 AL Rotterdam (NL); Unilever PLC, A Company Registered in England and Wales under Company no. 41424, London EC4Y 0DY Greater London (GB)
(72) Inventor: Dazo, Philip Edward, Englewood Cliffs, NJ 07632 (US); Goosman, Scott,Jeffrey, Englewood Cliffs, NJ 07632 (US); Marasigan, Anna Virginia, Englewood Cliffs, NJ 07632 (US)
(74) Representative: Reijns, Tiemen Geert Pieter

(56) References cited:
- WO-A1-02/082927
- WO-A1-2004/091305
- WO-A1-2010/009419
- US-A- 5 987 898
- US-B1- 6 524 636

## Description

### FIELD OF THE INVENTION

The present invention is directed to a frozen sauce component of a frozen meal made for heating in a skillet prior to serving. More particularly, the frozen sauce component is unitized and freeze/thaw stable for transport and storage despite high sugar and salt solids content. The frozen meals made with the sauce component of the present invention have uniformly mixed sauce component and require minimum steps to reheat prior to consuming.

### BACKGROUND OF THE INVENTION

Many consumers enjoy the convenience of partially prepared or assembled frozen foods or meals. Frozen meals generally are well balanced nutritionally with a protein component, a carbohydrate component, a vegetable component, and of course a sauce component for flavor and character. While frozen meals often may be simply heated in the microwave or oven, skillet preparation is often preferred for a more fresh taste and texture, especially when components are included that still require at least partial cooking. Unfortunately, many frozen skillet meals still require consumer involvement in preparation, while such foods are most preferred when they avoid the extra steps or mess associated with having the sauce component in a pouch. Particularly, high sugar or salt sauces are conventionally included in a separate package, which separates the sauce from the other components. Commercially available products including sauce in a plastic bag or pouch are sold, for example, under Contessa and Friday's brands.

It is of increasing interest to use unitized or discrete particulates of sauce mixed directly with other components of a frozen skillet food or meal. Such unitized frozen sauce particulates are commercially available in Bertolli brand frozen meals and dishes. The advantages of unitized or discrete particulates of sauce for the manufacturer are in the ability to uniformly mix the sauce composition and also to uniformly distribute the sauce into each bag during assembly of the final product. The advantages of such particulates for the consumer include ease of consumer dispensing into a skillet, eliminating the additional and possibly messy steps of opening and pouring out the contents of a sauce packet, and a relatively quickly melting sauce particulate due to the high surface area afforded by its unitized format.

Challenges arise, however, in manufacturing dishes including a frozen unitized sauce component which requires particularly high dissolved solids contents. Particularly challenging is the freezing of these sauces, as the high dissolved sugar or salt contents tend to depress the freezing point to temperatures well below the -18°C (0°F) and higher temperatures, at which such dishes are normally processed, frozen, handled, transported, and/or stored. Frozen products are generally stored by the consumer in a conventional freezer at about -18°C (0°F) to about -12°C (10°F). Any sauce which will be distributed as a frozen pellet must be capable of remaining frozen above -18°C (0 deg. F) and achieve hardness of about 5 million to about 10 million Pascal, or it will not be sufficiently frozen and will undergo freeze thaw cycles in the distribution system.

Dissolved solids in a system will affect the freezing point. In the field, a measure of dissolved solids in the system is known as degree Brix. Theoretically, Brix is a measure of dissolved sugar solids on a weight basis.

For example, dishes known as Teriyaki, Sweet and Sour, Lo Mein, and similar, require solids levels of as high as about 50 degree Brix. At these levels, the sauces will not freeze under current freezing technologies and infrastructures which operate at temperatures of about -18°C (0 deg. F) and higher. Sugar contents up to 50 degree Brix sugar solids lower the freezing point to about -22°C (- 8deg F) and result in a hardness of 0.8 million Pascal, which is too soft to be machined.

Efforts have been made for preparing frozen dishes with teriyaki-based sauce containing sugar and salt, such as in U.S. Patent No. 6,524,636. However, this patent appears to describe sauces of relatively lesser sugar and salt content. While it may or may not be a possible solution for even higher salt and sugar composition, separation of the sauce component into two or more separate chips with different composition is undesirable because it creates difficulties such as uniform mixing of the different chip components to obtain a consistent flavor and spice mixture. Moreover, additional equipment is required to separately weigh out (scale) and assemble (conveyor line) the added sauce components in a multiple component system; and when the pellets are combined the sauce characteristic is likely to be variable.

WO2004/091305 relates to methods, compositions, and articles of manufacture for preparing frozen beverages. The methods and articles generally include first and/or second frozen pellets. Upon mixing the frozen pellets with an appropriate liquid for a sufficient time, a frozen beverage is obtained. Articles of manufacture including frozen pellets, as well as optional objects such as straws, spoons, and mixing containers are disclosed. Methods, compositions, and articles of manufacture for preparing frozen pellets are also described.

US 5,987,898 relates to extruded frozen pellets of sauce and a method for freezing pellets of sauce. This method includes dosing a layer of_ sauce onto a refrigerated surface, partially freezing the sauce on the surface to cause a generation of ice crystals and an increase in the viscosity of the unfrozen sauce, removing the partially frozen sauce from the surface, mixing the frozen and unfrozen sauce to form a shapeable sauce, forming the shapeable sauce into pellets, and freezing the pellets.

WO 2010/009419 relates to a composition and method of making frozen pellets made with juice includes a composition having at least about 50 weight equivalents of juice and a multipart stabilizer that acts as a gelling agent and a viscosifying agent.

Another way to get around the freezing challenge of the sweet recipes, such as Asian type sauces, has been to use artificial sweeteners. However, sugar is much preferred by most consumers as a natural ingredient, and as an ingredient that imparts desirable visual and mouthfeel appeal to the final product. In any event, artificial sweeteners can also result in the dissolved solids issues discussed above.

This invention, therefore, is directed to a frozen sauce component of a frozen skillet meal having a high dissolved solids equivalent content and sufficient hardness in manufacturing to permit unitization thereof by cutting. The sauce composition makes use of oil encapsulated form of otherwise soluble ingredients in a system comprising oil, water, and flavoring ingredients such as those including but not limited to molasses, soy sauce, concentrated fruit or vegetable juices or purees, as may be required by a particular recipe.

### SUMMARY OF THE INVENTION

In a first aspect, the present invention is directed to a frozen high dissolved solids equivalent sauce component of a frozen skillet meal, said sauce having a composition comprising:
(a) 4 to 25% oil, preferably 10 to 15% oil;
(b) water;
(c) dissolved solids (high sugar for Orange Chicken, high salt for LoMein) measuring a Brix of up to 17 to 25, preferably 20 Brix to 21 Brix ( 25% to 30% sugar from ingredients such as those including but not limited to molasses, soy sauce, concentrated fruit or vegetable juices or purees, and mixtures, etc);
(d) encapsulated solids, which are sugar and/or salt;
   where the composition has a freezing point of -12°C (10°F) to -6.7°C (20°F), preferably about -9.4°C (15°F).

Any edible oil of plant, animal, or synthetic origin may be used. Preferably, the oil used in the composition is liquid at room temperature, preferably vegetable oil, preferably olive oil, canola (rapeseed) oil, peanut oil, soy bean oil, sunflower oil, or other liquid edible oil.

Preferably, the sauce component composition has a hardness of at least 5 million Pascal at -18°C (0°F), more preferably 7 million Pascal at -18°C (0°F) to 10 million Pascal at -18°C (0°F), so it can be cut and assembled with the other components of the frozen dish.

Preferably, the sauce component composition has a rate of freezing of from 10°C (50°F) to -18°C (0°F) in 5 to 20 minutes, preferably 10 to 15 minutes, more preferably 10 to 12 minutes, so as to allow for crystal structure leading to desired hardness in the frozen state.

Sauce pellets of any shape may be used. According to the preferred embodiment of the present invention, unitized sauce particulates have an approximate diameter of about 0.5 inch to about 2 inches. The inventive composition permits unitization by cutting a layer of the frozen sauce composition to form frozen sauce particulates.

In a second aspect, the present invention is directed to a frozen skillet food, dish or meal made with the sauce pellet in the first aspect of this invention, having
(a) 20 percent to 45 percent by weight of the sauce component according to claim 1 which has been pelletized;
(b) 10 to 55 percent protein component;
(c) 10 percent to 55 percent vegetable component; and
(d) optionally, 0 to 40 percent carbohydrate component,
   said dish being suitable to heat in a skillet.

Preferably, the frozen skillet dish or meal comprises 15 percent to 50 percent by weight sauce component.

Approximate diameter means the diameter of a cross-section of a component of a frozen dish or meal, such as the sauce component or the vegetable component, whereby the cross-section of the component is not a circle or not a perfect circle. All diameters and thickness as discussed herein are taken in the frozen state, prior to heating the product.

Freezing or frozen as used herein means solidified to a hardness of at least 5 million Pascal at -18°C (0°F), preferably 7 million Pascal to 10 million Pascal, more preferably 8 million Pascal, at a temperature of -18°C (0°F) to -6°C (20°F).

Hardness, as used herein, means the break strength of a frozen pellet, measured in grams of force per square centimeter (and converted into Pascal). Hardness testing is performed using a Texture Technologies TA-XT2i PLUS instrument. The height of the probe (also called the distance between plates) is preset to about 15mm to about 20 mm, depending on pellet size and shape. The sample weight is about 8 to about 9 grams. When a threshold force of 15 grams is met, the cycle begins, and the blade travels down for another about 5mm. The maximum resistive force occurs at breakage, followed by a decrease in hardness. The instrument measures and records the maximum resistive force or break strength. A hardness of at least 5 million Pascal at -18°C (0°F) is needed to achieve freezing or frozen state as defined herein.

Assembly means combining during filling for packaging, simultaneously making a mixture and filling the desired package or making the mixture in the desired package by filling the desired package with sauce and/or vegetable and/or protein and optionally carbohydrate.

High dissolved solids equivalent means the total amount of dissolved solids that would have been present in the sauce composition had the sugar and/or salt that is encapsulated in oil been directly incorporated in the sauce composition. The present invention addresses freezing issues with freezing point depression that would occur in products having high dissolved solids equivalent of as high as about 25 to about 50 Brix, preferably about 30 to about 45 Brix.

The term "unitized" is used herein in connection with the inventive sauce compositions which are prepared in frozen sheets at a temperature of about -18°C (0°F) and cut into individual sauce component particles while in this frozen state.

The term "comprising" is used herein in its ordinary meaning and means including, made up of, composed of, consisting and/or consisting essentially of. In other words, the term is defined as not being exhaustive of the steps, components, ingredients, or features to which it refers.

The term "salt" is used herein in its broadest ordinary meaning, and preferably is directed to food grade, edible, salts.

The term "oil" is used herein to refer to any fatty substance of plant or animal origin, preferably edible oil.

### DETAILED DESCRIPTION OF THE PREFERRED EMBODIMENTS

The unitized frozen sauce component composition according to the present invention obviates the deficiencies of the prior art discussed above. The inventive composition is particularly advantageous for high sugar and/or salt sauce products. This is because the inventive composition overcomes the challenge of freezing a high dissolved solids composition and addresses the need to use existing freezing technologies. For example, compositions having a high dissolved solids equivalent as high as 25 to 50 Brix, preferably 30 to 45 Brix, are the subject of the present invention. Freezing point depression is avoided using oil encapsulated ingredient that would otherwise dissolve, such as hydrogenated oil encapsulated sugar and/or salt. Preferably, the composition according to the present invention removes all added sugar from a water based sauce pellet, while utilizing encapsulated sugar. The resulting sauce component pellets can be mixed with the other components of the frozen skillet dish or meal. The resulting mixture is filled into freezer transport and storage appropriate packaging for ultimate consumer heat preparation in a skillet.

Specifically, the frozen high dissolved solids equivalent sauce component of a frozen skillet dish or meal has a composition comprising:
(a) 4 to 25% oil, preferably 10 to 15% oil;
(b) water;
(c) dissolved solids;
(d) encapsulated solids which are sugar and/or salt;
   wherein the composition has a freezing point of -12°C (10 deg. F) to -6.7°C (20°F), preferably -9.4°C (15°F). Preferably, the oil used in the composition is liquid at room temperature, preferably vegetable oil, preferably olive oil, canola (rapeseed) oil, peanut oil, soy bean oil, sunflower oil, or other liquid edible oil.

High dissolved solids equivalent is often required for high sugar recipes such as Orange Chicken, and high salt recipes such as LoMein. The dissolved solids and the encapsulated solids, together, contribute to the total high dissolved solids equivalent. Of the total high dissolve solids equivalent of 30 to 50 Brix, the dissolved solids component measures a Brix of up to 17 to 25, preferably 20 Brix to 21 Brix. In other words, in the high sugar recipes example, 25% to 30% of dissolved sugar solids come from flavoring ingredients such as those including but not limited to molasses, soy sauce, concentrated fruit or vegetable juices or purees (e.g., orange juice, tomato paste), and mixtures.

The frozen sauce component composition has a hardness of at least 5 million Pascal at -18°C (0°F), which facilitates the cutting of the plated composition into unitized pellets, as well as allows for assembly of the unitized pellets with other components and into packaging without melting or sticking.

Preferably, the composition has a rate of freezing from 10°C (50°F) to -18°C (0°F) in 5 to 20 minutes, preferably 10 to 15 minutes, more preferably 10 to 12 minutes. Without wishing to be bound by theory, it is believed that, when the sauce component composition is rapidly cooled, smaller and less structured crystals are formed. This results in a more rigid, harder frozen sauce component.

### Oil

Any edible oil of plant, animal, or synthetic origin may be used in the sauce composition, regardless of solid or liquid state and regardless of degree of hydrogenation. Preferably, the oil used in the sauce composition is liquid at room temperature, preferably vegetable oil, preferably olive oil, canola (rapeseed) oil, peanut oil, soy bean oil, sunflower oil, or other liquid edible oil.

### Encapsulated Sugar

The amount of oil encapsulate in the encapsulated sugar is 3% to 15% by weight, preferably 5%. There is no limitation as to particular sugar or salt to be encapsulated. For example, maltose, sucrose, fructose and/or dextrose are suitable, although sucrose is preferred. The type of oil and the melting point of the oil encapsulate is selected so as to be compatible with the other ingredients in the sauce pellet. Preferably, hydrogenated vegetable oil is used as encapsulate material. The degree of hydrogenation may be varied depending on desired encapsulate properties, such as melting point. Oil encapsulates with too high of a melting point result in a waxy mouthfeel of the sauce. The mouthfeel can also be addressed by adjusting the type and amount of encapsulate relative to the sugar and/or salt it encapsulates. Preferably palm oil is used as a major component of the encapsulate material.

Use of encapsulated solute, such as sugar and/or salt, allows the solute to be added to the sauce without dissolving, due to the coating. Therefore, the encapsulated sugar prevents freezing point depression.

Not all coatings for sugar will work as encapsulating material. For example, carnouba wax coated sugar crystals were tested in place of the oil encapsulated sugar, and did not work appropriately in an industrial scale process that has throughput rates of about 1000kg to about 2500kg per hour. The carnouba wax was found to be too soft for processing.

### Process for Preparation and Unitization of Sauce

The sauce is produced, by mixing sauce ingredients in a stainless steel kettle at an elevated temperature of 38 (100) to 100°C (212°F), followed by cooling to ambient temperature of 10°C (50°F) to 27°C (80°F) in a holding tank. No sugar in addition to what may be present in sauce flavoring ingredients, such as soy sauce, hoisin sauce, orange juice concentrate, or tomato paste, is added at this stage.

Encapsulated sugar is then added to the sauce while in the holding tank or as the sauce is sent to the freezing unit. The sauce and encapsulated sugar are mixed uniformly in the appropriate proportions to match the target formulation. Sauce is then plated onto the freezing system, preferably a contact freezer, operating at -18°C (0°F). A layer of frozen sauce is thereby produced.

Preferably, the rate of freezing is from 10°C (50 °F) to -18°C (0°F) in 5 to 20 minutes, preferably 10 to 15 minutes, more preferably 10 to 12 minutes. The total dissolved solids equivalent is advantageously at 46 to 50 Brix.

Frozen sauce is cut to form frozen sauce pellets or particulates having approximate diameters of about 0.3 inch to about 2 inches. Although not limited thereto, preferably, the sauce is formed into substantially rectangular prism shaped particulates, preferably having dimensions of about 0.5 x 1.5 x 0.75 inches. Although any size sauce particulates will work, size of sauce particulates is an important consideration for mixing with other components of a dish and for packaging. Uniformity in composition and size is also important, keeping in mind that processing and dispensing of frozen components of a variety of types, sizes, and densities can prove difficult for uniform mixing thereof.

Frozen sauce pellets according to the present invention maintain a hardness of at least 5 million Pascal, preferably at least 7 million Pascal at the temperature of -18°C (0°F) to -12°C (10°F) at the time of production and filling or after filling.

An industrial scale process has throughput rates of about 1000kg to about 2500kg per hour.

### Protein Component

Protein component, as used herein, means a component derived from meat or fish (e.g., like, beef, pork, chicken, seafood and/or fish). Preferably, chicken, beef, shrimp, or a combination of any two or more thereof is used. In a preferred embodiment, the protein component is unitized to have a variety of diameters, including an approximate diameter of about 0.9 cm to about 9 cm, preferably about 2.5 cm (about 1 inch), and including all ranges subsumed therein. Preferably, the unitized protein component used in combination with the sauce component according to the present invention is individually quick frozen (IQF) protein particulates, which have been seasoned and cooked prior to freezing.

### Vegetable Component

Vegetables, as used herein, means a plant or portion thereof cultivated for an edible part, including flower buds like broccoli and cauliflower buds. Other illustrative non-limiting examples of the type of vegetable that may be used in this invention include a mixture of any combination of carrots, beets, zucchini, potato, mushrooms, corn, onions, water chestnuts, green beans, snow peas, green peas, peppers, asparagus and bok choy. In a preferred embodiment, the vegetables have a variety of diameters, including an approximate diameter of about 0.9 cm to about 9 cm, including all ranges subsumed therein. Preferably, the vegetables used in combination with the sauce component according to the present invention are individually quick frozen (IQF) vegetable particulates, which have been blanched prior to freezing.

### Carbohydrate Component

Optionally, but preferably, a carbohydrate component is provided. Carbohydrate component may include rice, pasta, potato, and other ingredients useful for side dishes or meals.

### Optional Additives

It is also within the scope of this invention to employ optional additives. In addition to sauce pellets, protein component, and vegetables, the present invention optionally employs pieces or particulates of legumes, nuts, and fruits. Further optional additives may include cheese, dairy ingredients like milk, sour cream, oil and margarine, and spices (e.g., pepper), flavors, flavor enhancers, like monosodium glutamate or kelp, and thickeners and/or agents such as guar gum, xanthan gum, starches or mixtures thereof.

When optional additives are used, they typically make up less than about 15 percent by weight of the mixture fed into the package.

### Assembly of Component Mixture with Sauce Component

Sauce pellets are combined with other frozen ingredients (e.g. about 25% by weight protein component, about 20 % by weight vegetables, about 45% by weight sauce, and about 10 % by weight carbohydrate). Sauce and other ingredients are weighed out on separate scales and mixed by assembly directly into flexible bags. The sauce and each of the other components are uniformly distributed.

Each component may be initially collected in individual totes. Note, the frozen sauce component according to the present invention does not melt under pressure of unitized pellets collected on top of one another, despite the high dissolved solids equivalent.

Along with the vegetables and other particulates, a mixture with sauce is prepared in this invention. There is no limitation with respect to the type of sauce that may be used in this invention other than that the sauce is suitable to heat and serve with protein, carbohydrate and/or vegetables. The sauce composition according to the present invention is particularly suitable for sauces requiring high or strong sweet and/or salty perception. Illustrative and non-limiting examples of the type of sauce that may be used in this invention include pesto sauce, alfredo sauce, a tomato-based sauce, hollandaise sauce, cream or dairy-based sauce, cheese sauce, or chicken, beef or fish flavored gravies, Teriyaki sauce, Sweet and Sour Sauce, Lo Mein sauce. The latter three make particularly advantageous use of the present invention.

When combining before filling for packaging is desired, a mixing apparatus for receiving the frozen unitized sauce component, the protein component, the vegetable component, and optionally the carbohydrate component, may be set up. Assembly takes place at a temperature of -18°C (0 deg. F) to -12°C (10 deg. F), preferably -18°C (0 deg. F). Subsequent to uniformly mixing the sauce, protein and vegetable, and optionally the carbohydrate components, the resulting mixture is preferably gravity fed to a filler. The filler then feeds the sauce, protein, vegetable and optionally carbohydrate component mixture into desired packaging.

An alternative to the mix then fill process described above is a two stage filling process that simultaneously combines protein, vegetable and sauce, and optionally carbohydrate, during filling into desired packaging.

Typically, the mixture fed into the packaging is typically made up of about 10 to about 25 percent protein component, about 10 percent to about 55 percent vegetable component, about 20 to about 50 percent sauce component, and about 0 to about 40 percent carbohydrate component, including all ranges subsumed therein.

### Package

In a preferred embodiment, the package used in this invention is flexible, such as a sachet or a package generally classified as a flexible bag. Such packaging is typically suitable for servings of eight or less, and preferably, for one to four servings. In an especially preferred embodiment, the mixture fed to packaging according to this invention is ready-to-heat dishes or meals for the skillet, such as chicken and vegetables with Teriyaki sauce. Moreover, at the time of packaging or after packaging but while still in production, the sauce and vegetable and/or carbohydrate mixture should be at a temperature of -28°C (-18°F) to 0°C (32°F), including all ranges subsumed therein.

### Filling

The resulting vegetable, pasta and sauce mixtures/product may be filled into flexible packages (about 20 oz to about 24 oz per package) at a temperature of -18°C (0°F) to 12°C (10°F). The packages are sealed, cased, and palletized. Subsequently, the product is kept in the packages at a temperature of about -28°C (-18°F) during storage and distribution. Then, in the stores' or consumers' refrigerators, the storage temperature is about -18°C (0°F) to about -12°C (10°F).

The examples below are provided to facilitate an understanding of the present invention. The examples are not intended to limit the scope of the claims.

### Comparative Example A

This example demonstrates a method whereby the resulting sauce component is not uniformly mixed.

A high solids sauce was prepared by mixing two separate sauce pellets into the product. One pellet contains savory elements that are frozen into a high water content pellet. The second pellet contains a high oil pellet were sugar is dispersed into the oil and frozen.

The two pellets are then combined volumetrically, evenly mixed and then dosed by one scale into the final product. When cooked the two pellets combine into one sauce.

This method can work successfully if the pellets remain perfectly mixed through the scale. Typically a sauce pellet weighs between 5 to 9 grams with typical sauce amount in a 22 ounce serving being 150 grams +/- 30g. The pellet size resulting in 30 to 17 pellets per finished product. If the sauce mix is 67% pellet A and 33% pellet B the pellet chips weigh 5 grams, this results in 20 pellets of sauce A and 10 pellets of sauce B per bag. If the pellets of sauces A & B fluctuate by 3 pellets per sauce pellet, resulting in +/- 10% variation in sauces A and B. The variation will result in 30%+ changes in sugar concentrations in the sauces delivered to the finished product. This is a huge fluctuation.

### EXAMPLE 1

This example demonstrates that sauce pellets according to the present invention have a uniformly mixed composition.

Skillet dishes having mixed vegetables, pasta and a sauce were made in the following manner.

High solids equivalent sauce pellets were prepared according to the present invention, using only 1 pellet. A base sauce was created wherein encapsulated sugar is incorporated homogeneously so each pellet is nearly identical in composition within 5%. The pellets are frozen and then dosed to the finished product using one scale which consistently delivers the desired sauce weight with proper composition to the finished product. The scales have an accuracy of about +/-1%. This results in minimal changes of sugar concentration in the finished sauce.

Example 1 and comparative Example A demonstrate that mixing time is essential for homogeneous mixing, as, advantageously, is the process using a single pellet for the entire sauce composition. According to the invention, a single lane is used to load the sauce into packaging, significantly minimizing any opportunity for non-uniformity upon assembly.

### EXAMPLE 2 and Comparative Example B

These examples demonstrate pellet hardness achieved based on use of encapsulated solids.

High solids equivalent pellets of Lo Mein type sauce were prepared, with compositions set forth in the Table below.

**TABLE 1. Sauce Composition**

| **Ingredients** | **Control/No Encapsulate (Comparative B)** Percent by Weight* | **With Encapsulate (Example 2)** Percent by Weight* |
|---|---|---|
| Canola Oil | 11.5600 | 11.5120 |
| Garlic, Ground | 3.5600 | 3.5452 |
| IQF Onions, 10 x 10 mm | 3.9100 | 3.8937 |
| Soy Sauce Powder, Less Sodium | 12.95 | 12.90 |
| Sucrose, Granulated | 7.9300 | 0.0000 |
| Water | BAL (about 48) | BAL (about 48) |
| Rice Starch | 3.25 | 3.24 |
| Red Chili Pepper | 0.06 | 0.06 |
| Canola Oil | 9.00 | 8.96 |
| Encapsulated Sugar *** | 0.00 | 8.3127 |
| | | |
| Apparent Degree Brix | 33.00 | 24.00 |
| Actual Degree Brix | 33.00 | 33.00 |

| | | |
|---|---|---|
| * based on total weight of sauce component ** BAL means balance to 100.00% *** obtained from Balchem Corporation, New Hampton, New York | | |

The pellets of Comparative Example B were too soft to process. For example, the sugar in the system was too tacky and product stuck to the machine.

The pellets according to the present invention, Example 2, where all added sugar had been eliminated from the sauce composition, had the necessary Hardness for processing according to the present invention.

## Claims

1. A frozen high dissolved solids equivalent sauce component composition comprising:
(a) 4 to 25% oil;
(b) water;
(c) dissolved solids;
(d) encapsulated solids;
wherein said composition has a freezing point of -12°C (10 deg. F) to -6.7°C (20 deg. F), wherein said dissolved solids result in a Brix measurement of 17 to 25, and wherein said composition is a pellet; and
wherein said encapsulated solids are encapsulated sugar and/or salt.

2. The composition according to claim 1 wherein said dissolved solids are sugar and/or salt.

3. The composition according to anyone of the preceeding claims wherein 25% to 30% of the total sugar is present from flavoring ingredients selected from the group consisting of molasses, soy sauce, fruit or vegetable juice concentrates or pastes, and mixtures thereof.

4. The composition according to anyone of the preceeding claims having a freezing point of -9.4°C (15 deg. F)

5. The composition according to anyone of the preceeding claims having a hardness of at least 5 million Pascal at - 18°C (0°F).

6. The composition according to anyone of the preceeding claims having a rate of freezing of from 10°C (50 deg F) to -18°C (0 deg F) in 5 to 20 minutes.

7. The composition according to anyone of the preceeding claims wherein said frozen sauce is cut to form frozen sauce pellets.

8. The composition according to anyone of the preceeding claims wherein said pellets have an approximate diameter of 0.3 inch to 2 inches.

9. The sauce composition according to anyone of the preceeding claims, wherein said frozen sauce pellets maintain a hardness of 8 million Pascal at the temperature of from -18°C (0°F) to -12°C (10°F) at the time of filling or after filling.

10. A frozen dish comprising mixture of
(a) 20 percent to 50 percent by weight of the sauce component according to anyone of claims 1 to 9 which has been pelletized;
(b) 10 percent to 55 percent protein component;
(c) 10 percent to 55 percent vegetable component; and
(d) optionally, 0 to 40 percent carbohydrate component, said dish being suitable to heat in a skillet.

11. The frozen dish according to claim 10, wherein said frozen dish is for preparation in a skillet.

12. The frozen dish according to claim 10 or 11, wherein said mixture is produced prior to filling into packaging.

13. The frozen dish according to anyone of claims 10 to 12,
wherein said mixture is produced during the filling into packaging.

14. The frozen dish according to anyone of claims 10 to 13,
wherein said vegetable component is a mixture comprising any combination of broccoli, cauliflower, peppers, carrots, beets, zucchini, mushrooms, corn, onions, water chestnuts, green beans, snow peas, green peas, potato, asparagus, bok choy.

15. Process to produce a sauce component composition according to anyone of claims 1 to 9 comprising the steps of:
- mixing sauce ingredients at an elevated temperature of about 38°C (100) to about 100°C (212°F),
- cooling to ambient temperature of about 10°C (50°F) to about 27°C (80°F).
- freezing.

## Patentansprüche

1. Zusammensetzung in Form eines gefrorenen Soßenbestandteils mit einem hohen Äquivalent gelöster Feststoffe,
die Folgendes aufweist:
(a) 4 bis 25 % Öl;
(b) Wasser;
(c) gelöste Feststoffe;
(d) verkapselte Feststoffe;
wobei die Zusammensetzung einen Gefrierpunkt von -12 °C (10 °F) bis -6,7 °C (20 °F) aufweist, wobei die gelösten Feststoffe zu einem Brix-Messwert von 17 bis 25 führen und wobei die Zusammensetzung ein Pellet ist; und
wobei die verkapselten Feststoffe verkapselter Zucker und/oder verkapseltes Salz sind.

2. Zusammensetzung nach Anspruch 1,
wobei die gelösten Feststoffe Zucker und/oder Salz sind.

3. Zusammensetzung nach einem der vorstehenden Ansprüche,
wobei 25 bis 30 % des gesamten Zuckers aus aromatisierenden Bestandteilen vorliegen, die aus der Gruppe ausgewählt sind, die aus Melassen, Sojasoße, Frucht- oder Gemüsesaftkonzentraten oder -pasten und Gemischen davon besteht.

4. Zusammensetzung nach einem der vorstehenden Ansprüche,
die einen Gefrierpunkt von -9,4 °C (15 °F) aufweist.

5. Zusammensetzung nach einem der vorstehenden Ansprüche,
die bei -18 °C (0 °F) eine Härte von mindestens 5 Millionen Pascal aufweist.

6. Zusammensetzung nach einem der vorstehenden Ansprüche,
die eine Gefrierrate von 10 °C (50 °F) bis -18 °C (0 °F) in 5 bis 20 Minuten aufweist.

7. Zusammensetzung nach einem der vorstehenden Ansprüche,
wobei die gefrorene Soße zerteilt wird, um gefrorene Soßenpellets zu erzeugen.

8. Zusammensetzung nach einem der vorstehenden Ansprüche,
wobei die Pellets einen ungefähren Durchmesser von 0,3 bis 2 inch aufweisen.

9. Soßenzusammensetzung nach einem der vorstehenden Ansprüche,
wobei die gefrorenen Soßenpellets zum Zeitpunkt des Einfüllens oder nach dem Einfüllen eine Härte von 8 Millionen Pascal bei einer Temperatur von -18 °C (0 °F) bis -12 °C (10 °F) beibehalten.

10. Gefrorenes Gericht, das ein Gemisch von Folgendem aufweist:
(a) 20 bis 50 Gew.-% des Soßenbestandteils nach einem der Ansprüche 1 bis 9, der granuliert worden ist;
(b) 10 bis 55 Gew.-% Proteinbestandteil;
(c) 10 bis 55 % pflanzlichen Bestandteil; und
(d) gegebenenfalls 0 bis 40 % Kohlenhydratbestandteil,
wobei das Gericht für das Erhitzen in einer Bratpfanne geeignet ist.

11. Gefrorenes Gericht nach Anspruch 10,
wobei das gefrorene Gericht für die Zubereitung in einer Bratpfanne vorgesehen ist.

12. Gefrorenes Gericht nach Anspruch 10 oder 11,
wobei das Gemisch vor dem Einfüllen in die Verpackung erzeugt wird.

13. Gefrorenes Gericht nach einem der Ansprüche 10 bis 12,
wobei das Gemisch während des Einfüllens in die Verpackung erzeugt wird.

14. Gefrorenes Gericht nach einem der Ansprüche 10 bis 13,
wobei der pflanzliche Bestandteil ein Gemisch ist, das irgendeine Kombination von Broccoli, Blumenkohl, Paprika, Karotten, Rüben, Zucchini, Champignons, Mais, Zwiebeln, Wasser, Maronen, grünen Bohnen, Kaiserschoten, grünen Erbsen, Kartoffeln, Spargel, Senfkohl aufweist.

15. Verfahren zum Herstellen einer Zusammensetzung in Form eines Soßenbestandteils nach einem der Ansprüche 1 bis 9,
das die folgenden Schritte aufweist:
- Mischen von Soßenbestandteilen bei einer erhöhten Temperatur von etwa 38 °C (100) bis etwa 100 °C (212 °F),
- Abkühlen auf Umgebungstemperatur von etwa 10 °C (50 °F) bis etwa 27 °C (80 °F);
- Gefrieren.

## Revendications

1. Composition de constituant de sauce congelée d'équivalent élevé en matières solides dissoutes comprenant :
(a) de 4 à 25 % d'huile ;
(b) de l'eau ;
(c) des matières solides dissoutes ;
(d) des matières solides encapsulées ;
dans laquelle ladite composition présente un point de congélation de -12°C (10 deg. F) à -6,7°C (20 deg. F), dans laquelle lesdites matières solides dissoutes résultent en une mesure Brix de 17 à 25, et dans laquelle ladite composition est une boulette ; et
dans laquelle lesdites matières solides encapsulées sont du sucre et/ou du sel encapsulé.

2. Composition selon la revendication 1, dans laquelle lesdites matières solides dissoutes sont du sucre et/ou du sel.

3. Composition selon l'une quelconque des revendications précédentes, dans laquelle de 25 % à 30 % du sucre total proviennent d'ingrédients d'arômes choisis dans le groupe constitué de molasses, de sauce de soja, de concentrés de jus ou de pâtes de fruits ou de légumes, et de mélanges de ceux-ci.

4. Composition selon l'une quelconque des revendications précédentes présentant un point de congélation de -9,4°C (15 deg. F).

5. Composition selon l'une quelconque des revendications précédentes présentant une dureté d'au moins 5 millions de Pascal à -18°C (0°F).

6. Composition selon l'une quelconque des revendications précédentes présentant une vitesse de congélation de 10°C (50 deg F) à -18°C (0 deg F) en de 5 à 20 minutes.

7. Composition selon l'une quelconque des revendications précédentes, dans laquelle ladite sauce congelée est coupée pour former des boulettes de sauce congelée.

8. Composition selon l'une quelconque des revendications précédentes, dans laquelle lesdites boulettes présentent un diamètre approximatif de 0,3 pouce à 2 pouces.

9. Composition de sauce selon l'une quelconque des revendications précédentes, dans laquelle lesdites boulettes de sauce congelée conservent une dureté de 8 millions de Pascal à la température de -18°C (0°F) à -12°C (10°F) au moment du remplissage ou après le remplissage.

10. Plat congelé comprenant un mélange de
(a) 20 pourcent à 50 pourcent en poids du constituant de sauce selon l'une quelconque des revendications 1 à 9 qui a été transformé en boulettes ;
(b) 10 pourcent à 55 pourcent de constituant de protéine ;
(c) 10 pourcent à 55 pourcent de constituant de légume ; et
(d) éventuellement, 0 à 40 pourcent de constituant de carbohydrate,
ledit plat étant approprié pour être chauffé dans une poêle.

11. Plat congelé selon la revendication 10, dans lequel ledit plat congelé est destiné à une préparation dans une poêle.

12. Plat congelé selon la revendication 10 ou 11, dans lequel ledit mélange est produit avant le remplissage dans un emballage.

13. Plat congelé selon l'une quelconque des revendications 10 à 12, dans lequel ledit mélange est produit pendant le remplissage dans un emballage.

14. Plat congelé selon l'une quelconque des revendications 10 à 13, dans lequel ledit constituant de légume est un mélange comprenant une combinaison quelconque de brocolis, chou-fleur, poivrons, carottes, betteraves, courgettes, champignons, maïs, oignons, châtaignes d'eau, haricots verts, pois mange-tout, petits pois, pommes de terre, asperges, choux de Chine.

15. Procédé de production d'une composition de constituant de sauce selon l'une quelconque des revendications 1 à 9 comprenant les étapes :
- de mélange d'ingrédients de sauce à une température élevée d'environ 38°C (100) à environ 100°C (212°F),
- de refroidissement à température ambiante d'environ 10°C (50°F) à environ 27°C (80°F).
- de congélation.
